# EUROPEAN PATENT APPLICATION

(11) **EP 2 522 703 A2**
(43) Date of publication of application: **14.11.2012**
(21) Application number: 12167641.5
(22) Date of filing: 11.05.2012
(51) Int. Cl.: C09J 5/02

(54) **Adhesion promotion of metal to a dielectric**

(30) Priority: 12.05.2011 US 201161485457 P
(71) Applicant: Rohm and Haas Electronic Materials LLC, Marlborough, MA 01752 (US)
(72) Inventor: Cheetham, Kevin, Sutton, MA Massachusetts 01590 (US)
(74) Representative: Buckley, Guy Julian

(57) **Abstract**

An adhesion solution containing curable amine compounds and curable epoxy compounds are applied to a dielectric material followed by drying the solution and electrolessly plating a thin metal layer on the dielectric material. The composite is then annealed to cure the amine and epoxy compounds. The adhesion solution contains an excess amount of curable amine to curable epoxy. The adhesion solution and method may be used in the manufacture of printed circuit boards.

## Description

The present invention is directed to a method of promoting the adhesion of a metal to a dielectric. More specifically, the present invention is directed to a method of promoting the adhesion of a metal to a dielectric where the dielectric is treated with a solution containing curable amine compounds in excess of curable epoxy compounds.

Electroless metal plating on dielectrics has been done for many years. Such dielectrics are often components of composite articles composed of a polymer resin sheet with a continuous or discontinuous thin metal foil joined to both sides of the sheet. Examples of such composite articles are printed circuit boards (PCBs).

Several printed circuit boards may be joined together to form multilayer boards. In multilayer boards the circuit of one board is connected to the circuit of one or more of the other boards. This may be achieved by forming pads or circular areas of metal at points on the conductive lines of the board. The pads also may be isolated from the conductive lines. The other boards that are to be connected are similarly provided with pads and in the joining process the pads of the different boards are aligned over one another.

The multilayer board is then pressed and cured after which the pads of the multilayer board are drilled to form through-holes. Since the through-hole in cross-section presents a surface of alternating layers of the pads of the individual printed circuit boards separated by non-conductive polymer resin, an electrically conductive element has to be employed in the through-hole to form an electrical connection between the pads. This is done by a process known in the art as through-hole plating (PTH).

The demand for enhanced performance and functionality of integrated circuit components continues to increase design and fabrication complexity of PCBs. The boards designed for these components need to be manufactured with multiple layers of copper on dielectric material. The width of copper traces is continually shrinking making adhesion of copper to dielectrics more difficult. One method commonly used to promote adhesion of copper to dielectric build-up material is desmear. Desmear typically involves treating the dielectric substrate surface with a solvent swell to infiltrate polymer free volume and prepare the surface for oxidation, an oxidizing agent such as permanganate or chromate to promote micro-roughness by oxidizing polar species on the surface and near the surface of the dielectric, and a neutralizer to remove any reaction by-products or solvents from the previous steps and de-swell the matrix. A metal catalyst is then applied to the micro-roughened dielectric surface followed by application of an electroless metal plating bath, typically a copper electroless bath, to deposit a thin film metal layer. The micro-roughened surface enables a mechanical bond to form between the dielectric surface and the thin film metal layer. However, higher average roughness alone does not necessarily result in better adhesion of the metal to the dielectric surface. In addition, as the boards and the features on the boards become smaller the micro-roughened surface detracts from the electrical performance. Current lines and other essential board features follow the irregular contour of the surface thus compromising electrical performance. Also, PCBs are being manufactured with smoother surfaces and many of the conventional mechanical adhesion and etched surface methods cannot be used as readily as in the past. Accordingly, there is a need to provide good adhesion between the thin film metal layers and the dielectric and at the same time eliminate or reduce the irregular surface of the dielectric.

In one aspect a method includes providing a dielectric substrate; treating a surface of the dielectric substrate by applying a solution including one or more curable amine compounds and one or more curable epoxy compounds adjacent the surface of the dielectric substrate, the one or more curable amine compounds is included in the formulation in excess of the one or more curable epoxy compounds; drying the solution adjacent to the treated surface of the dielectric substrate; electrolessly plating a metal layer on the treated surface of the dielectric substrate to form a composite; and heating the composite to cure the one or more amine compounds and the one or more epoxy compounds.

In another aspect a solution includes one or more curable amine compounds and one or more curable epoxy compounds where the one or more curable amine compounds is included in the solution in excess of the one or more curable epoxy compounds.

The method enables the formation of a chemical bond between the dielectric substrate and a metal layer in contrast to a mechanical bond typical in conventional adhesion methods for joining metal to a dielectric. In addition the excess amine in relation to the amount of epoxy in the adhesion formulation allows for any open functional groups on the surface of the dielectric to cure along with the amine and epoxy. Substantial micro-roughening of the dielectric surface is avoided and a substantially smooth surface is provided for current lines and other essential features of electronic devices to provide uniform current flow and improve electrical performance. Finer line circuitry is also possible with a smoother surface, thus enabling smaller articles. In addition the adhesion components are sufficiently similar in dielectric properties to the dielectric materials of the dielectric substrate to provide the desired chemical adhesion.
Figure 1 are SEMs at 1050X of the surface of an FR4 epoxy/glass panel before application of an adhesion solution and the surface of the same panel after application of the adhesion solution;
Figure 2 is a graph of peel strength versus weight ratio of amine to epoxy in six adhesion solutions; and
Figure 3 are SEMs at 10,000X of cross sections of FR4 epoxy/glass panels showing the interface between plated copper and epoxy/glass panels of one untreated and one treated with an adhesion solution.

As used throughout this specification, the abbreviations given below have the following meanings, unless the context clearly indicates otherwise: g = gram; kg = kilograms; L = liter; eq = equivalent weight; cm = centimeter; mm = millimeter; µm = micron; ° C = degrees Centigrade; ASD = amps/dm²; UV = ultra violet; wt% = percent by weight; T_{g} = glass transition temperature; and SEM = Scanning electron micrograph.

The terms "printed circuit board" and "printed wiring board" are used interchangeably throughout this specification. The terms "plating" and "deposition" are used interchangeably throughout this specification. The term "desmear" means removal of accretions or unwanted residue from dielectric material. All amounts are percent by weight, unless otherwise noted. All numerical ranges are inclusive and combinable in any order except where it is logical that such numerical ranges are constrained to add up to 100%.

Solutions include one or more curable amine compounds and one or more curable epoxy compounds where the one or more curable amine compounds are included in the solutions in excess by weight or moles to the one or more curable epoxy compounds. Typically the one or more curable amine compounds are included in the solutions to the one or more epoxy compounds at a weight or molar ratio of at least 2:1 or such as from 2:1 to 4:1 or such as from 3:1 to 4:1 or such as from 3.5:1 to 4:1.

Amine compounds which may be used include amine compounds which may be cured using conventional curing methods, such as, for example, UV and thermal curing methods. Typically such amine compounds are polyamines and have at least two reactive amine hydrogen atoms or such as at least three reactive amine hydrogen atoms. Such compounds are well known to those of skill in the art. Typically the polyamine compounds include at least one primary amino group, more typically at least two primary amino groups and most typically at least three primary amino groups. These may be attached to terminal, secondary or tertiary carbon atoms. The amino groups may also be attached to two carbon atoms, bridging the same to form polyamino polyalkylene compounds or to form cyclic compounds. Terminal amino groups may be alkylated.

The polyamine compounds may be chosen from one or more of aliphatic, cycloaliphatic, araliphatic and aromatic polyamines. Such polyamines are well known in the art.

Aliphatic amines are typically linear or branched hydrocarbon polyamines and polyether containing polyamines, such as polyamines include an poly(oxyalkylene) backbone. The linear or branched hydrocarbon polyamine typically includes at least 3 active amine hydrogens, more typically 3 to 20 active amine hydrogens. They include at least 2 amine groups and typically 2 to 10 amine groups. They typically include from 2 to 30, more typically 4 to 16 carbon atoms. The carbon atoms may be present in one single straight or branched hydrocarbon chain. They may also be present in the form of several straight or branched hydrocarbon chains bridged by one or more amine groups. Examples of linear and branched hydrocarbon polyamines are ethylenediamine, diethylenetriamine, triethylenetetramine, tetramethyldipropylenetriamine, pentamethyldiethlenetriamine, , pentamethyldipropylenetriamine, tetraethylenepentamine, pentaethylene hexamine, polyethyleneamines, 1,2-propyllenediamine, 1,3-propyllenediamine, 1,4-butanediamine, 1,3-diaminopentane, hexamethylenediamine, 2-methyl-pentamethylenediamine, neopentanediamine, (2,2,4)- and (2,4,4)-trimethylhexamethylenediamine (TMD), aminoethylpiperazine, 1,6-hexamethylenediamine, N,N-dimethylaminodipropanetriamine and 1,13-diaminotridecane. Examples of commercially available polyamines are JEFFAMINE® Trimaines (T series) and JEFFAMINE® Secondary Amines (SD series and ST series).

Polyether containing polyamines are chosen from polyether containing polyamines that include at least 2 active amine hydrogens, typically 3 to 20 active amine hydrogen groups, at least 2 amine groups, typically 2 to 10 amine groups and from 6 to 150, typically 2 to 50 and more typically 2 to 30 carbon atoms, and include 2 to 6, typically 2 to 3 carbon atoms in the ether groups. The polyether polyamines include a poly(oxyalkylene) backbone. This backbone may be a homopolymer or copolymer of two or more of the oxyalkylene monomer units. Typically polyoxyalkylene polyamines are derived from poly(propylene oxide) or poly(ethylene oxide) or their copolymers. The polyether polyamines typically have an average weight molecular weight of 150 to 2000, more typically 150 to 500. The above definition of polyether polyamines includes any polyamine containing monomers other than oxyalkylene, such as polyols, glycidyl and bisphenol A and bisphenol F in their backbone.

More typically the polyether polyamines included in the solutions are chosen from polyoxypropylene polyamines, such as polyoxypropylene diamines and polyoxypropylene triamines. Such polyether polyamines may have an average weight molecular weight of 150 to 2000 or such as 150 to 500. Most typically such polyoxypropylene diamines and triamines include at least one amine group attached to a secondary carbon atom.

Many of the polyether polyamines are commercially available. Examples of commercially available polyether polyamines are polyoxypropylene diamines and trimaines marketed by Huntsman under the JEFFAMINE® trade name, such as JEFFAMINE® D230, D400, D2000, T403, XTJ-502, XTJ-504, XTJ-506 and T-5000.

Additional amines which may be included in the solution are piperazines, such as N-aminoethylpiperazine and dimethylpiperrazine which is commercially available under the tradename JEFFCAT®. Substituted propylamines such as dimethaminopropylamine, methoxypropylamine and aminopropylmorpholine may also be included in the solutions. Further additional amine which may be included include the amines under the tradename EPIKURE™_{.}

The solutions may also include polyether aliphatic polyamines such as cyanoalkylated, such as cyanoethylated, and hydrogenated polyalkylenes. More specifically these are polyamines obtained by cyano-C₂₋₁₀ alkylation and hydrogenation of polyethers, such as polyoxyalkylenes. In the case of cyanoethylation this results in diaminopropylethers, such as poly(oxyalkylene) diaminopropylethers. The polyethers are defined as above. Examples of commercially available polyether aliphatic polyamines are under the trade name ANCAMINE® 1922A from Air products & Chemicals, Inc.

Cycloaliphatic polyamines include, but are not limited to, cycloaliphatic polyamines having 1 to 4 non-aromatic rings, at least 3 and typically 3 to 20 active amine hydrogens, at least 2 and typically 2 to 10 amine groups and from 4 to 30, more typically 6 to 20 carbon atoms where the amine groups may be attached directly to the ring or to an alkyl chain extending from the ring or may be incorporated within the ring, or combinations thereof and mixtures of the foregoing. Examples are isophoronediamine (IPDA), bis-(p-aminocyclohexyl)methane (PACM), cyclohexanediamines (DCH), methylene bridged polycycloaliphatic polyamines (MPCA), [5,2,1,0]-tricyclodencae-2,6-bis-hexamethylenediamine and norbane diamine (NBDA).

Araliphatic polyamines include, but are not limited to, polyamines which include 1 to 4 aromatic rings, at least 3 to 20 active amine hydrogens, at least 2 and typically 2 to 10 amine groups and from 8to 30, typically 8 to 20 carbon atoms, where at least two of the amine groups are attached to alkyl chains extending from the aromatic ring. Examples of such polyamines are m-xylylenediamine and p-xylylenediamine.

Aromatic polyamines include, but are not limited to, polyamines which include 1 to 4 aromatic rings, at least 3 and typically 3 to 20 active amine hydrogens, at least 2 and typically 2 to 10 amine groups and from 6 to 30, typically 6 to 20 carbon atoms, and where at least two of the amine groups are attached directly to an aromatic ring. Examples of such polyamines are methylenediamine (MDA), 1,3- and 1,4-toluenediamines and m-phenylene-diamine (mPD).

The solutions have an epoxy solids equivalent weight of equal to or greater than 150 g/eq, typically 150 g/eq to 2000 g/eq. The term "epoxy solids equivalent weight" means the weight in grams of epoxy compound, excluding solvents and water, which contains one mole of epoxide functional groups. It may be determined by titration with perchloric acid in the presence of a tetraalkylammonium bromide compound, as is well known in the art. The functionality of a compound refers to the average number of functional groups per molecule, here epoxy groups.

The epoxy compounds included in the solutions include at least one epoxide or oxirane group, typically on average the epoxide compound includes more than one epoxide group. Such epoxide compounds include, but are not limited to, glycidyl ethers of monohydric or polyhydric alcohols, such as, for example, glycerol, hydrogenated diphenylolpropane, or of polyhydric phenols, such as, for example, resorcinol, diphenylolpropnae or phenol and aldehyde condensates. Also, glycidyl esters of polybasic carboxylic acids, such as hexahydropthalic acid or dimerized fatty acids may be included in the solutions. Other suitable epoxy compounds include monofunctional aliphatic and aromatic glycidyl ethers, such as, for example, butylglycidyl ether or phenylglycidyl ether or glycidyl esters, such as glycidyl acrylate or epoxides, such as styrene oxide, or polyfunctional di- or triglycidyl ethers. Typically polyfunctional di- and triglycidyl ethers are used, more typically diglycidyl ethers of a polyalkylene glycol or cycloalylene glycol are used. Typically, the diglycidyl ethers of a polyalkylene glycol are water or C₁₋₆ alkane polyol initiated polyalkylene glycols terminated with glycidyl ether moieties. Polyalkylene glycol chains include, but are not limited to, those derived from ethylene oxide, propylene oxide, butylene oxide, ethylene glycol, propylene glycol, butylene glycol, a butane diol, such as 1,3 butane diol or 1,4 butane diol, a propane diol, such as 1,2 propane diol or 1,3 propane diol. Such epoxy compounds are well known to those of skill in the art. A commercially available ethylene glycol diglycidyl ether is QUETOL™ 651, available from Polysciences, Inc. and a commercially available 1,4-butanediol diglycidyl ether is ERISYS™ GE-21, available from Emerald Performance Materials.

Glycidyl ethers of cycloalkylene glycols include, but are not limited to, cycloalkylene compounds containing C₅₋₂₀ alkylene chains which contain one or more five membered rings. Typically the alkylene chain is C₆₋₁₀ cycloalkylene chain contains six membered ring. An example of a glycidyl ether of a cycloalkylene glycol is the diglycidyl ether of cyclohexane diol.

Additional epoxy compounds include bisphenol based epoxies and Novolac epoxy compounds. Examples of bisphenol based epoxy compounds are bisphenol A glycidyl ethers, bisphenol F glycidyl ethers, modified bisphenol A glycidiyl ethers, modified bisphenol F glycidyl ethers. Such epoxy compounds are well known in the art. Examples of commercially available bisphenol based epoxy compounds are those sold under the trademarks BECKOPOX® EP384w/53WAMP, EPI-REZ® 3521WY53, ARALDITE® PZ3961 and WATERPOXY® 1422.

Novolac epoxy compounds are also commercially available. Examples of commercially available Novoloc epoxy compounds are EPI-REZ® 5003W55, EPI-REZ® 6006W70, ARALDITE® PZ323 and HUNTMANS™ 3601 Epoxy.

The solutions may be water based, solvent based or mixtures thereof. In water based solutions if the one or more curable amines or the one or more curable epoxy compounds are not sufficiently soluble one or more water soluble or water miscible organic solvents may be added to solubilize the components. The solutions are not dispersions or suspensions of particles. Sufficient amount of water or solvent are added to solubilize the amines and epoxy solute compounds. The amount of solvent may vary depending on the desired solids content and thickness of the coating on the dielectric. Typically, water or organic solvent ranges from 10 parts to 90 or such as from 30 to 70 part by weight of the solution with the remainder being solute.

Conventional organic solvents may be used. Such organic solvents include, but are not limited to, alcohols, such as mono- and polyhydroxy alcohols, ketones, such as methy ethyl ketone, glycols, glycol ethers, glycol ether acetates, esters and aldehydes.

In addition to the curable amines and curable epoxy compounds, the solutions may also include one or more conventional surfactants. Surfactants are included in conventional amounts such as from 0.05 parts by weight to 5 parts by weight, or such as from 0.25 parts by weight to 1 part by weight of the solution. Typically the surfactants are non-ionic surfactants and include, for example, aliphatic alcohols such as alcohol alkoxylates. Such aliphatic alcohols have ethylene oxide, propylene oxide, or combinations thereof, to produce a compound having a polyoxyethylene or polyoxypropylene chain within the molecule, i.e., a chain composed of recurring (-O-CH₂-CH₂-) groups, or a chain composed of recurring (-O-CH₂-CH-CH₃) groups, or combinations thereof. Typically such alcohol alkoxylates are alcohol ethoxylates having carbon chains of 7 to 15 carbons, linear or branched, and 4 to 20 moles of ethoxylate, typically 5 to 40 moles of ethoxylate and more typically 5 to 15 moles of ethoxylate. Many of such alcohol alkoxylates are commercially available. Examples of commercially available alcohol alkoxylates include, for example, linear primary alcohol ethoxylates such as NEODOL™ 91-6, NEODOL™ 91-8 and NEODOL™ 91-9 (C₉-C₁₁ alcohols having an average of 6 to 9 moles of ethylene oxide per mole of linear alcohol ethoxylate) and NEODOL™ 1-73B (C₁₁ alcohol with an average blend of 7 moles of ethylene oxide per mole of linear primary alcohol ethoxylate). Both are available from Shell Oil Company, Houston, Texas.

The solutions may also include one or more curing accelerators. Conventional curing accelerators may be used and in conventional amounts such as from 0.05 parts by weight to 5 part by weight. Examples of such accelerators are imidazole derivatives such as 2MZ, 2E4MZ, C11Z, C17Z and 2PZ manufactured by Shikoku chemicals Corporation, guanamines, such as acetoguanamine and benzoguanamine, organic acid salts, amine complexes of boron trifluoride, triazine derivatives, such as ethyldiamino-S-triazine, 2,4-diamino-S-triazine and 2,4-diamino-6-xylyl-S-triazine, polyphenols, tertiary ammonium salts, oganic phosphines and optical cationic polymerization catalysts such as IRGACURE™ 261 manufactured by Ciba Geigy Co., Ltd.

The components of the solution may be combined in any order. The solution may be heated if necessary to expedite dissolution of the components. Typically the components are combined together at room temperature. Mixing may be done using conventional laboratory stirring apparatus.

Prior to applying the solution to the dielectric substrate, the substrate is cleaned. Cleaning may be done using conventional methods such as conventional detergent and chemical cleaning.

The solution may then be applied to at least one surface of a dielectric substrate. Conventional apparatus may be used to apply the solution to form a substantially smooth and uniform layer on the dielectric surface. Such conventional apparatus include, but are not limited to, a double sided screen printer, such as those available from Built-In Precision machine Co., Ltd., gravure coating, reverse roll coating, knife over roll coating or gap coating, metering rod (Meyer rod) coating, slot coating, immersion dip coating, curtain coating, air knife coating and spray coating. The thickness of the solution coating may vary. Typically the thickness of the coating is from 0.5µm to 5mm, or such as from 1µm to 1mm. Parameters such as solution viscosity, solids content such as from 1% to 50%, withdrawal speed from the coating apparatus and temperature, typically room temperature, may determine the coating thickness and uniformity. Minor experimentation may be done to achieve the optimum viscosities, withdrawal speed, solids content and temperature to achieve a desired thickness.

The dielectric material is typically a polymer resin material used in the manufacture of PCBs. Such polymer resins include, but are not limited to, epoxy resins, such as epoxy/glass, difunctional and multifunctional epoxy resins, bimaleimide/triazine and epoxy resins (BT epoxy), epoxy/polyphenylene oxide resins, acrylonitrilebutadienestyrene, polycarbonates (PC), polyphenylene oxides (PPO), polyphenylene ethers (PPE), polyphenylene sulfides (PPS), polysulfones (PS), polyamides, polyesters such as polyethyleneterephthalate (PET) and polybutyleneterephthalate (PBT), polyetheretherketones (PEEK), liquid crystal polymers, polyurethanes, polyetherimides, polytetrafluoroethylene (PTFE) and polytetrafluoroethylene blends, such as PTFE with polyphenylene oxides and cyanate esters and composites thereof. Such polymer resin materials may have a high or low T_{g}. High T_{g} polymer resins are resins which have a T_{g} of 160° C and higher, or such as from 160° C to 280° C or such as from 170° C to 240° C.

After the solution is coated on the dielectric substrate it is dried to form a substantially smooth surface. Drying may be done by conventional processes, such as placing the dielectric in a conventional convection oven or using an infrared drying system, such as a Glenro custom designed conformal coating infrared oven with an overhead conveyor. Drying is done at a temperature range of 70° C to 110° C. Drying time may range from 30 minutes to 60 minutes. Coating thickness of the dry adhesion composition may vary. Typically the thickness of the dry adhesion composition coating ranges from 0.2µm to 100µm or such as from 10µm to 50µm.

After the dielectric is dried it is then treated with a promoter. Desmear with a solvent swell used in many conventional processes is excluded. Conventional promoters may be used. Such promoters include sulfuric acid, chromic acid, alkaline permanganate or plasma etching. Typically alkaline permanganate is used as the promoter. An example of a commercially available promoter is CIRCUPOSIT PROMOTER™ 4130 available from Rohm and Haas Electronic Materials, Marlborough, MA. Promoters are typically applied at temperatures of 50° C to 100° C. Optionally, the dielectric substrate is rinsed with water.

A neutralizer is then applied to the dielectric to neutralize any acid residues or basic residues left by the promoter. Conventional neutralizers may be used. Typically the neutralizer is an aqueous alkaline solution containing one or more amines or a solution of 3wt% peroxide and 3wt% sulfuric acid. Neutralizers are typically applied at temperatures from 30° C to 80° C. Optionally the substrate is rinsed with water.

An acid or alkaline conditioner is then applied to the dielectric substrate. Conventional conditioners may be used. Such conditioners may include one or more cationic surfactants, non-ionic surfactants, complexing agents and pH adjusters or buffers. Commercially available acid conditioners include, but are not limited to, CIRCUPOSIT CONDITIONER™ 3320 and CIRCUPOSIT CONDITIONER™ 3327 available from Rohm and Haas Electronic Materials, Marlborough, MA. Suitable alkaline conditioners include, but are not limited to, aqueous alkaline surfactant solutions containing one or more quaternary amines and polyamines. Commercially available alkaline surfactants include, but are not limited to, CIRCUPOSIT CONDITIONER™ 231, 3325, 813 and 860 available from Rohm and Haas Electronic Materials. The dielectric is conditioned at 30° C to 70° C for 5 to 10 minutes. Optionally, the dieletric is rinsed with water.

If metal pads, such as copper pads, are included on the dielectric substrate, conditioning is followed by microetching the metal pads otherwise this step is not done. Conventional microeteching compositions may be used. Microetches include, but are not limited to, 60 g/L to 120 g/L sodium persulfate or sodium or potassium oxymonopersulfate and sulfuric acid (2%) mixture, or generic sulfuric acid/hydrogen peroxide. An example of a commercially available microetching composition includes CIRCUPOSIT MICROETCH™ 3330 available from Rohm and Haas Electronic Materials.

A pre-dip is then applied to the dielectric. Examples of pre-dips include 2% to 5% hydrochloric acid or an acidic solution of 25 g/L to 75 g/L sodium chloride. Optionally, the dielectric is rinsed with cold water.

A catalyst is then applied to the treated surface of the dielectric. Any conventional catalyst may be used. The choice of catalyst depends on the type of metal to be deposited on the surface of the dieletric. Typically the catalysts are colloids of noble and non-noble metals. Such catalysts are well known in the art and many are commercially available or may be prepared from the literature. Examples of non-noble metal catalysts include copper, aluminum, cobalt, nickel, tin and iron. Typically noble metal catalysts are used. Suitable noble metal colloid catalysts include, for example, gold, silver, platinum, palladium, iridium, rhodium, ruthenium and osmium. More typically, noble metal catalysts of silver, platinum, gold and palladium are used. Most typically silver and palladium are used. Commercially available catalysts include, for example, CIRCUPOSIT CATALYST™ 334 and CATAPOSIT™ 44 available from Rohm and Haas Electronic Materials. The catalyst is applied to the dielectric at 30° C to 90° C for 5 to 10 minutes. Optionally the surface is rinsed with water.

The dielectric is then plated with a metal using a conventional electroless metal bath. Conventional electroless baths including immersion baths and conventional plating parameters may be used. Typically the dielectric is placed in an electroless or immersion bath containing the metal ions of the desired metal to be deposited. Metals which may be deposited include, but are not limited to, copper, nickel, gold, silver and copper/nickel alloys. Typically copper is plated on the dielectric surface. An example of a commercially available electroless copper plating bath is CIRCUPOSIT™ 880 Electroless Copper plating bath available from Rohm and Haas Electronic Materials, LLC. Electroless plating is typically done at a temperature range of 25° C to 60° C. Electroless plating is typically done until a thin film metal layer of 0.5µm to 5mm thick is achieved. Optionally, a layer of gold or silver finish using immersion gold or silver may be deposited over a copper, copper/nickel or nickel deposit.

After the metal is deposited the metal plated dielectric or composite is optionally rinsed with water. Optionally, an anti-tarnish agent may be applied to the metal. Conventional anti-tarnish agents may be used. Examples of anti-tarnish agents are ANTI TARNISH™ 7130 and CUPRATEC™ 3 (obtainable from Rohm and Haas Electronic Materials).

In one embodiment the metal plated dielectric or composite is placed between plates of a hot platen and annealed to completely cure the amine and epoxy compounds and form a substantially smooth adhesion layer at the interface of the metal and the dielectric. Annealing is done for 30 minutes to 60 minutes at temperatures of 150° C to 200° C or such as from 160° C to 190° C. While not being bound by theory, the annealing process causes the epoxy functionalities, amine functionalities and any hydroxyl groups or other reactive functional groups available on the dielectric material to cure such that a chemical bond is formed between the thin metal film and the dielectric material thus increasing adhesion between the metal and the dielectric. A full metal plate process may then done as described below.

In another embodiment, prior to annealing and prior to the full metal plate process, the composite of the dielectric with the thin metal film may be allowed to rest at room temperature for at least one day or the composite may be heated between plates of a hot platen for 30 minutes to 60 minutes to partially cure the amine and epoxy compounds of the solution. Heating is done at temperatures of 70° C to 100° C.

In still another embodiment a full metal process may be done prior to annealing. Such full plate process may include conventional lithographic processing such as by photoimaging using photoresist to form circuit patterns on the thin film metal layer. This is followed by selective metal deposition on the circuit patterns of the metal surface of the composite. Typically metal deposition by electrolytic metal plating of, for example, copper, copper alloys, tin and tin alloys is done Such methods are conventional and well known in the art. Typically copper is electroplated in the circuit patterns.

In an electrolytic plating process, the composite is used as a cathode. A conventional soluble or insoluble anode may be used as a second electrode. A conventional rectifier is used to provide the current source. A process of pulse plating or direct current (DC) plating or a combination of DC and pulse plating may be used. Such plating processes are known in the art. Current densities and electrode surface potentials may vary depending on the specific substrate to be plated. Generally, current densities range from 0.1ASD to 20ASD. Electrolytic plating baths are maintained at a temperature range of 20° C to 110° C. Temperature ranges for specific metals vary. Copper baths are maintained in a temperature range of 20° C to 80° C with acid copper baths at temperatures of 20° C to 50° C. Electrolytic plating is continued for a time sufficient to form a deposit of desired thickness. After electroplating the composite substrate may be rinsed with water. Annealing as described above is then done on the composite substrate to improve adhesion between the metal deposits and the dielectric.

The composite may then be cut to desired sizes and conventional processing such as formation of through-holes or vias. These are formed in the composite by drilling or punching or any other method known in the art. The through-holes and vias are then desmeared using conventional processes and then plated. Further processing may take place to form completed printed circuit boards or other electronic articles and devices.

The method enables the formation of a chemical bond between the dielectric substrate and a metal layer in contrast to a mechanical bond typical in conventional adhesion methods for joining a metal to a dielectric. Substantial micro-roughening of the dielectric surface is avoided and a substantially smooth surface is provided for current lines and other essential features of electronic devices to provide uniform current flow and improve electrical performance. Finer line circuitry is also possible with a smoother surface, thus enabling smaller articles.

The following examples are intended to illustrate the invention but are not intended to limit its scope.

### Examples 1-8

Eight adhesion promotion solutions were prepared as shown in Table 1 below.

**Table 1**

| **EXAMPLE** | Ethylene glycol diglycidyl ether (parts by weight) | Polyoxypropylenetriamine (parts by weight) | Propylene glycol methyl ether acetate (parts by weight) |
|---|---|---|---|
| 1 | 1 | 1 | 50 |
| 2 | 1 | 2 | 50 |
| 3 | 1 | 3 | 50 |
| 4 | 1 | 4 | 50 |
| 5 | 1 | 4.5 | 50 |
| 6 | 1 | 5 | 50 |
| 7 | 1 | 5.5 | 50 |
| 8 | 1 | 6 | 50 |

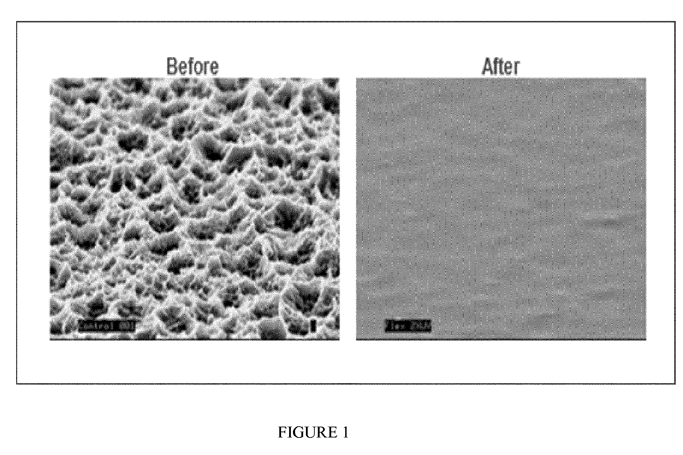

Eight FR4 epoxy/glass boards were obtained from Isola Laminate Systems Corp., LaCrosse Wisconsin. Each board was treated according to the following method:
1. Each board was first pre-cleaned using a conventional acetone cleaner.
2. Each board was then dip coated in one of the adhesion promotion solutions of Table 1 for 1 minute at room temperature using bench top dip lab coaters.
3. Each board was then dried in a Glenro custom designed conformal coating infrared oven with an overhead conveyor for 60 minutes at 100° C. The thickness of the dry adhesion promotion compositions were from 4µm to 5µm thick. Figure 1 shows the surface of an FR4 epoxy/glass board before application of the adhesion promotion solution and the same board after application of the adhesion promotion solution after drying. The surface of the board after applying the adhesion promotion solution had a smooth surface in contrast to the same board prior to adhesion promotion application.
4. The adhesion promotion coated surfaces of each board was then treated with an alkaline promoter solution of aqueous alkaline permanganate at a pH of 12 for 7 minutes at 80° C.
5. The boards were rinsed with cold water.
6. The though-holes in the boards were then treated with 180 liters of an aqueous neutralizer composed of 3wt% hydrogen peroxide and 3wt% sulfuric acid at room temperature for 75 seconds.
7. The boards were then rinsed with cold water.
8. Each board was then treated with CIRCUPOSIT CONDITIONER™ 3320 aqueous acid conditioner for 5 minutes at 40° C.
9. Each board was then rinsed with cold water.
10. A pre-dip was then applied to the surfaces of each board for 40 seconds at room temperature. The pre-dip included 5% concentrated hydrochloric acid.
11. The boards were then primed for 5 minutes at 40° C with an aqueous solution of a catalyst for electroless copper metallization. The catalyst had the following formulation:

**Table 2**

| **COMPONENT** | **AMOUNT** |
|---|---|
| Palladium Chloride | 1 g |
| Concentrated Hydrochloric Acid | 300 ml |
| Sodium Stannate | 1.5 g |
| Tin chloride | 40 g |
| Water | To one liter |

12. The boards were then rinsed with cold water.
13. The surfaces of the boards were then plated with electroless copper by immersing each board in 1000 liters of an electroless copper bath for 8 minutes at 36° C. The electroless copper bath had the following formulation:

**Table 3**

| **COMPONENT** | **AMOUNT** |
|---|---|
| Copper sulfate Pentahydrate | 2 g |
| Formaldehyde | 2.5 g |
| Sodium hydroxide | 5 g |
| Ethylene diamine tetraacetate (EDTA) | 25 g |
| Chloride ions | 5 g |
| 2,2-Dipyridyl | 2 ppm |
| Water | To one liter |

14. After electroless copper deposition the boards were rinsed with cold water.
15. Each board was then anneal backed at 160° C for 60 minutes in a conventional oven.
16. Each board was then allowed to cool to room temperature and the peel strength of one of the copper deposits was tested for each board using a Tensile Tester A tensile strength tester. The peel strengths are recorded in Table 4 below.

**Table 4**

| **EXAMPLE** | **PEEL STRENGTH (kg/cm)** |
|---|---|
| 1 | 0.41 |
| 2 | 0.43 |
| 3 | 0.45 |
| 4 | 0.47 |
| 5 | 0.39 |
| 6 | 0.3 |
| 7 | 0.29 |
| 8 | 0.25 |

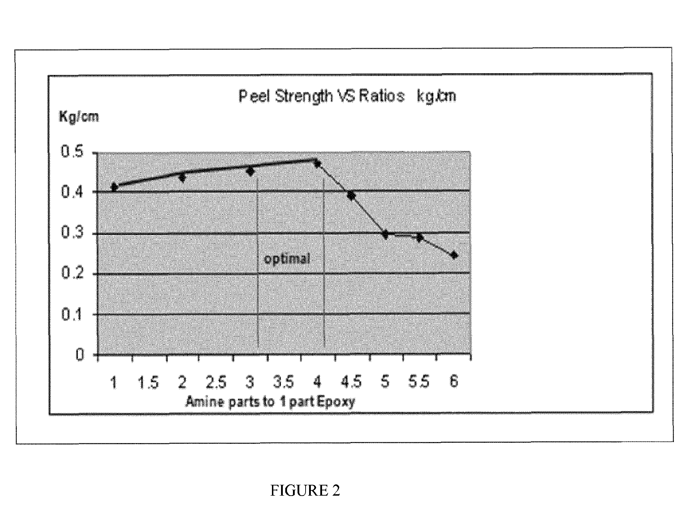

The results were plotted in a graph of peel strength versus amine parts to 1 part of epoxy as shown in Figure 2. Peel strength increased from 0.41kg/cm to 0.47kg/cm with an amine to epoxy parts by weight ratio of 1:1 to 4:1. When the amount of amine to epoxy increased beyond the 4:1 weight ratio, the peel strength began to decline to less acceptable levels of below 0.4kg/cm.

### Example 9

The following adhesion promotion solution was prepared.

**Table 5**

| **COMPONENT** | **AMOUNT (parts by weight)** |
|---|---|
| 1,4-butanediol diglycidyl ether | 1 |
| Polyoxypropylenetriamine | 4 |
| Propylene glycol methyl ether acetate | 50 |

Two FR4 epoxy/glass boards were obtained from Isola Laminate Systems Corp., LaCrosse Wisconsin. The first board was treated with the adhesion promotion solution of Table 5 as described in Example 1. The second board was not treated with any adhesion promotion solution. Each board was then prepped and plated with electroless copper as described in Example 1.

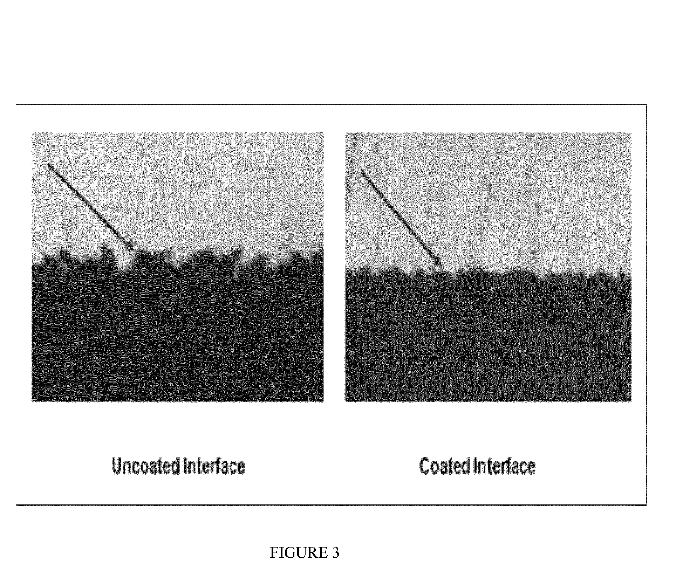

Each board was then sectioned in their middle to provide a cross-section showing the interface of the copper deposit and the epoxy/glass. Figure 3 is a 10,000X SEM of the cross-section of each board showing the interface of the copper deposit and the epoxy/glass as indicated by the arrow. The board which was treated with the adhesion promotion solution of Table 5 had a much smoother surface than that of the board which was not treated with the solution.

### Example 10

The following adhesion promotion solution is prepared.

**Table 6**

| **COMPONENT** | **AMOUNT** (parts by weight) |
|---|---|
| Ethylene glycol diglycidyl ether | 1 |
| Polyoxypropylenetriamine | 4 |
| NEODOL™ 91-9 | 1 |
| Water | 60 |

An FR4 epoxy/glass board is obtained from Isola Laminate Systems Corp., LaCrosse Wisconsin. The board is treated with the adhesion promotion solution of Table 6 as described in Example 1. The board is then prepped and plated with electroless copper as described in Example 1.

The board is then sectioned in its middle to provide a cross-section showing the interface of the copper deposit and the epoxy/glass. The interface of the copper and epoxy/glass is expected to appear substantially the same as the cross-section of the board with the coated interface of Figure 3.

### Example 11

The following adhesion promotion solution is prepared.

**Table 7**

| **COMPONENT** | **AMOUNT** (parts by weight) |
|---|---|
| 1,3 butanediol diglycidyl ether | 1 |
| Polyoxypropylenetriamine | 3 |
| NEODOL™ 91-9 | 1 |
| Water | 60 |

An FR4 epoxy/glass board is obtained from Isola Laminate Systems Corp., LaCrosse Wisconsin. The board is treated with the adhesion promotion solution of Table 7 as described in Example 1. The board is then prepped and plated with electroless copper as described in Example 1.

The board is then sectioned in its middle to provide a cross-section showing the interface of the copper deposit and the epoxy/glass. The interface of the copper and epoxy/glass is expected to appear substantially the same as the cross-section of the board with the coated interface of Figure 3.

## Claims

1. A method comprising:
a) providing a dielectric substrate;
b) treating a surface of the dielectric substrate by applying a solution comprising one or more curable amine compounds and one or more curable epoxy compounds adjacent the surface of the dielectric substrate, the amount of the one or more curable amine compounds to the one or more curable epoxy compounds in the solution is included in the solution in excess of the one or more curable epoxy compounds;
c) drying the solution adjacent to the treated surface of the dielectric substrate;
d) electrolessly plating a metal on the treated surface of the dielectric substrate; and
e) heating the metal plated dielectric substrate to cure the one or more amine compounds and the one or more epoxy compounds.

2. The method of claim 1, further comprising selectively electroplating a metal layer on the electrolessly plated metal prior to step e).

3. The method of claim 1, further comprising applying a promoter to the treated surface of the dielectric followed by applying a neutralizer to the treated surface of the dielectric followed by conditioning the treated surface of the dielectric followed by applying a pre-dip to the treated surface of the dielectric and then applying a catalyst to the treated dielectric surface after c) and prior to d).

4. The method of claim 1, wherein a weight ratio of the one or more curable amine compounds to the one or more epoxy compounds is at least 2:1.

5. The method of claim 4, wherein the weight ratio of the one or more curable amine compounds to the one or more epoxy compounds is from 2:1 to 4;1.

6. The method of claim 1, wherein the solution further comprises one or more surfactants.

7. The method of claim 1, wherein the solution comprises one or more curing accelerators.

8. The method of claim 1, wherein the one or more curable amine compounds are polyamine compounds chosen from aliphatic, cycloaliphatic, araliphatic and aromatic polyamines.

9. The method of claim 1, wherein the one or more curable epoxy compounds are chosen from glycidyl ethers, glycidyl esters, polyfunctional di- and triglycidyl ethers, bisphenol based epoxies and Novolac epoxy compounds.

10. The method of claim 1, wherein the dielectric substrate comprises a polymer resin chosen from epoxy resins, acrylonitrilebutadienestyrene, polycarbonates, polyphenylene oxides, polyphenylene ethers, polyphenylene sulfides, polysulfones, polyamides, polyesters, polybutyleneterephthalate, polyetheretherketones, liquid crystal polymers, polyurethanes, polyetherimides, polytetrafluoroethylene, polytetrafluoroethylene blends, cyanate esters and composites thereof.
